# EUROPÄISCHE PATENTANMELDUNG

(11) **EP 1 777 254 A1**
(43) Veröffentlichungstag der Anmeldung: **25.04.2007**
(21) Anmeldenummer: 06021491.3
(22) Anmeldetag: 13.10.2006
(51) Int. Cl.: C08K 3/02, C08K 3/32

(54) **Glühdrahtbeständige flammwidrige Polymere**

(30) Priorität: 22.10.2005 DE 102005050704
(71) Anmelder: Clariant Produkte (Deutschland) GmbH, 65929 Frankfurt am Main (DE)
(72) Erfinder: Hörold, Sebastian, Dr., 86420 Diedorf (DE); Steib, Christian, Dr., 86356 Steppach (DE); Schacker, Ottmar, Dr., 86368 Gersthofen (DE)
(74) Vertreter: Mikulecky, Klaus

(57) **Zusammenfassung**

Die Erfindung betrifft glühdrahtbeständige flammwidrige Polymere, dadurch gekennzeichnet, dass sie
als Komponente A 40 bis 90 Gew.-% Polymer,
als Komponente B 0 bis 40 Gew.-% Verstärkungsstoff,
als Komponente C 3 bis 15 Gew.-% roten Phosphor,
als Komponente D 5 bis 20 Gew.-% anorganisches Phosphat,
als Komponente E 0 bis 10 Gew.-% weitere Additive
enthalten, wobei die Summe der Komponenten immer 100 Gew.-% beträgt.

## Beschreibung

Die Erfindung betrifft glühdrahtbeständige flammwidrige Polymere und polymere Formmassen, die eine bestimmte Flammschutzmittel-Kombination enthalten.

Polymere werden häufig durch Zusätze phosphorhaltiger oder halogenhaltiger Verbindungen flammwidrig ausgerüstet. Insbesondere für thermoplastische Polymere hat sich roter Phosphor als wirksamer flammhemmender Zusatz erwiesen (Staendeke, H., Scharf, D., Kunststoffe 11, 79, 1989 und Levchik, G.F., Vorobyova, S.A., Gorbarenko, V.V. und Levchik, S., Weil, E.D., Journal of Fire Science, Vol 18. May/June 2000, Seite 172-183). Mit 7,5 % rotem Phosphor wird in verstärktem und unverstärktem Polyamid eine Klassifizierung UL 94 V-0 bei 0,8 mm erreicht.

Die DE-A-102 24 887 beschreibt Polymere, enthaltend eine Kombination aus rotem Phosphor, Zinkborat, Talkum und einer Lanthanidenverbindung. Durch die dortige Kombination wird eine Verbesserung in der Glühdrahtfestigkeit GWFI nach IEC 60695-2-12 auf 960°C erreicht.

Die DE-A-198 27 845 beschreibt thermoplastische Polyester-Formmassen mit einer Stickstoffverbindung sowie einer anorganischen und einer organischen Phosphorverbindung. Unter der anorganischen Phosphorverbindung werden Phosphinate verstanden, unter den organischen Phosphorverbindungen wird auch roter Phosphor genannt.

Die DE-A-101 30 831 beschreibt halogenfrei flammwidrige Polyester-Formmassen, die roten Phosphor, stickstoffhaltige Verbindungen und geringe Mengen an Hydrotalcit enthalten.

Die JP-A-10 182 940 beschreibt flammwidrige Epoxidharze mit Zusatz von Melaminpolyphosphat und mit Phenolharz verkapseltem rotem Phosphor.

In der JP-A-2001164063 werden Polymermischungen aus Styrolpolymeren und Polycarbonaten oder Polyestern mit Melaminpolyphosphat und rotem Phosphor beschrieben.

Die JP-A-11246778 offenbart flammwidrige Polymere mit rotem Phosphor und Tetrazolen, Siliconpulvern, Melaminpolyphosphat, hydratisierten Magnesiumsilikaten, hydratisierten Calciumboraten oder Vermicullit.

Schließlich beschreibt die JP-A-2003041098 Polyester mit Triazinverbindungen und Phosphaten, phosphorhaltigen Triazinverbindungen oder verkapseltem roten Phosphor und einem Harz mit aromatischen Ringstrukturen.

Die Wirkung von rotem Phosphor und Synergisten wie z.B. Melaminpolyphosphaten wird im Wesentlichen für Brandprüfungen nach UL 94 Vertikaltests beschrieben. Die Wirkung der einzelnen Verbindungen ist in einzelnen Thermoplasten aber noch nicht zufrieden stellend. Zudem ist die Wirkung im Glühdrahttest nach IEC 60695-2-12 und -13 noch unzureichend. Durch die für den UL 94 Test notwendigen relativ hohen Dosierungen an Melaminpolyphosphat kommt es auch zu Polymerabbau und Verfärbungen der flammwidrig ausgerüsteten Kunststoffe, dem bisher noch nicht wirkungsvoll begegnet werden kann.

Für die Anwendung in Haushaltsgeräten ist künftig die Einhaltung der Glühdrahtnorm nach IEC 60695-2-12 und -13 zwingend vorgeschrieben. Insbesondere für den so genannten GWIT (glow wire ignition temparature) stehen zuwenig polymere Materialien zur Verfügung, die eine Entzündungstemperatur von über 750°C erreichen.

Es war daher Aufgabe der vorliegenden Erfindung, glühdrahtbeständige flammwidrige Polymere und insbesondere Polyamide zur Verfügung zu stellen, die die im Elektro- und Elektronikbereich geforderten Brandnormen erfüllen, gut zu verarbeiten sind und ausreichende mechanische Werte aufweisen.

Gelöst wird diese Aufgabe durch die Verwendung von rotem Phosphor mit anorganischen Phosphaten, sowie gegebenenfalls dem Zusatz von weiteren Additiven sowie Füll- und Verstärkungsstoffen.
Die vorliegende Erfindung betrifft daher glühdrahtbeständige flammwidrige Polymere, dadurch gekennzeichnet, dass sie
als Komponente A 40 bis 90 Gew.-% Polymer,
als Komponente B 0 bis 40 Gew.-% Verstärkungsstoff,
als Komponente C 3 bis 15 Gew.-% roten Phosphor,
als Komponente D 5 bis 20 Gew.-% anorganisches Phosphat,
als Komponente E 0 bis 10 Gew.-% weitere Additive
enthalten, wobei die Summe der Komponenten immer 100 Gew.-% beträgt.

Bevorzugt ist die Komponente A in Mengen von 45 bis 65 Gew.-% in den glühdrahtbeständigen flammwidrigen Polymeren enthalten.

Besonders bevorzugt ist die Komponente A in Mengen von 50 bis 65 Gew.-% in den glühdrahtbeständigen flammwidrigen Polymeren enthalten.

Bevorzugt ist die Komponente B in Mengen von 25 bis 35 Gew.-% in den glühdrahtbeständigen flammwidrigen Polymeren enthalten.

Bevorzugt ist die Komponente C in Mengen von 5 bis 10 Gew.-% in den glühdrahtbeständigen flammwidrigen Polymeren enthalten.

Besonders bevorzugt ist die Komponente C in Mengen von 7 bis 10 Gew.-% in den glühdrahtbeständigen flammwidrigen Polymeren enthalten.

Bevorzugt ist die Komponente D in Mengen von 5 bis 15 Gew.-% in den glühdrahtbeständigen flammwidrigen Polymeren enthalten.

Besonders bevorzugt ist die Komponente D in Mengen von 5 bis 12 Gew.-% in den glühdrahtbeständigen flammwidrigen Polymeren enthalten.

Bevorzugt ist die Komponente E in Mengen von 0,05 bis 10 Gew.-% in den glühdrahtbeständigen flammwidrigen Polymeren enthalten.

Bevorzugt ist eine weitere Komponente E in Mengen von 0,1 bis 5 Gew.-% in den glühdrahtbeständigen flammwidrigen Polymeren enthalten.

Bevorzugt handelt es sich bei den Polymeren um Polyamide.

Besonders bevorzugt handelt es sich bei den Polymeren um verstärkte Polyamide.

Bevorzugt sind als Verstärkungsstoffe Glasfasern und/oder mineralische Füllstoffe enthalten.

Bevorzugt enthalten die glühdrahtbeständigen flammwidrigen Polymere als roten Phosphor stabilisierten roten Phosphor.

Bevorzugt ist der rote Phosphor mit Magnesium, Zinn, Aluminium, Silber oder Kombinationen daraus stabilisiert.

Bevorzugt weist der rote Phosphor eine Teilchengröße < 200 µm auf.

Bevorzugt handelt es sich bei den anorganischen Phosphaten (Komponente D) um weitgehend wasserunlösliche Phosphate wie Monocalciumphosphat, Dicalciumphosphat, Tricalciumphosphat, Calciumpyrophosphat, Magnesiumphosphat, Dimagnesiumphosphat, Trimagnesiumphosphat, Magnesiummetaphosphat, Manganphosphat, Dimanganphosphat, Trimanganphosphat, Zinkphosphat, Trizinkphosphat, Zinkpyrophosphat, Aluminiumphosphat, Trialuminiumphosphat, Aluminiummetaphosphat und Borphosphat.

Bevorzugt handelt es sich bei den anorganischen Phosphaten (Komponente D) um weitgehend wasserunlösliche Phosphate wie Calciumpyrophosphat, Magnesiummetaphosphat, Zinkpyrophosphat, Aluminiummetaphosphat und Borphosphat.

Insbesondere handelt es sich bei dem anorganischen Phosphat um Calciumpyrophosphat.

Bevorzugt handelt es sich bei den Verstärkungsstoffen um Glasfasern, Glaskugeln oder mineralische Verstärkungsstoffe.

Bevorzugt handelt es sich bei dem Additiv um Stabilisatoren, Verarbeitungshilfsmittel, Antidripping-Mitteln, Farbstoffen, Pigmenten und/oder Wachse.

Besonders bevorzugt enthalten die glühdrahtbeständigen flammwidrigen Polymere als Komponente A 50 bis 65 Gew.-% Polymer,
als Komponente B 25 bis 35 Gew.-% Verstärkungsstoff,
als Komponente C 7 bis 10 Gew.-% roten Phosphor,
als Komponente D 5 bis 12 Gew.-% anorganisches Phosphat,
als Komponente E 0,05 bis 5 Gew.-% weitere Additive,
wobei die Summe der Komponenten immer 100 Gew.-% beträgt.

Im Rahmen der vorliegenden Erfindung wird der rote Phosphor (Komponente C) in 3 bis 15 Gew.-%, bevorzugt 5 bis 10 Gew.-%, besonders bevorzugt 7 bis 10 Gew.-%, bezogen auf die Compoundrezeptur, eingesetzt. Bei den angegebenen Gewichtsprozenten handelt es sich um den Phosphor-Gesamtanteil in der jeweiligen Formmasse einschließlich etwaig auf den roten Phosphor aufgebrachter und bereits vorne beschriebenen Phlegmatisierungsmittel, Verkapselungsreagentien und/oder Stabilisatoren.

Überraschenderweise wurde gefunden, dass erfindungsgemäße Kombinationen von rotem Phosphor und anorganischen Phosphaten, wie beispielsweise Calciumphosphate, Aluminiumphosphate, Zinkphosphate, Magnesiumphosphate, Manganphosphate und Borphosphate die Brandanforderungen nach UL 94 V-0, GWFI 960°C nach IEC 60695-1-12 sowie eine deutlich verbesserte Glühdrahtbeständigkeit GWIT nach IEC 60695-2-13 aufweisen. Die erfindungsgemäßen Flammschutzmittelkombinationen sind gut zu verarbeiten und ergeben flammwidrige Polymere mit sehr guten mechanischen Eigenschaften.

Anorganische Phosphate wie Natrium, Kalium- oder Calciumphosphate werden als Düngemittel, Metallreinigung, Phosphatierung sowie Lebensmittelzusatzstoff verwendet. Die Verwendung als Flammschutzmittel ist wenig gebräuchlich, da die Phosphate normalerweise keine ausreichende Wirkung zeigen. Als Flammschutzmittel werden im wesentlichen Ammonium- und Melaminphosphate eingesetzt.

Unter rotem Phosphor sind im vorliegenden Zusammenhang alle farbigen allotropen Formen des Phosphors zu verstehen, wobei roter Phosphor bzw. Phosphorqualitäten mit einem Anteil an rotem Phosphor von größer 95 % bevorzugt sind. Die Partikel haben dabei eine mittlere Teilchengröße von 200 bis 1 µm, vorzugsweise 100 bis 10 µm, besonders bevorzugt 80 bis 20 µm. Der verwendete rote Phosphor kann hierbei unbehandelt oder mit bekannten Mitteln phlegmatisiert und/oder mikroverkapselt und/oder vorstabilisiert sein.

Als Phlegmatisierungsmittel lassen sich hierbei übliche Reagentien wie u.a. Mineralöle, Paraffinöle, Chlorparaffine, Polytetrahydrofurane, Ester der Trimmellithsäure, vorzugsweise von Alkoholen mit 6 bis 13 C-Atomen wie Trioctyltrimellitat und organische Phosphatverbindungen verwenden. Des Weiteren können Ester der Phthalsäure eingesetzt werden, die üblicherweise aus Phthalsäure und Alkoholen mit 6 bis 13 C-Atomen darstellbar sind. Beispiele für solche Verbindungen sind Dipentylphthalat, Dihexylphthalat, Diheptylphthalat, Dioctylphthalat oder Di-2-ethylhexylphthalat. Auch können Metallsalze/Metallverbindungen basierend u. a. auf Aluminium, Zink oder Calcium wie z. B. Aluminiumoxid oder Aluminiumhydroxid Verwendung finden, welche gleichzeitig auch stabilisierende Wirkung haben können. Ein Überblick über einsetzbare Phlegmatisierungsmittel in Ergänzung zu den bereits aufgeführten Verbindungen findet sich zudem in Chao, Wu et al., "A comprehensive survey of chemical dust suppressants in the world over the last 15 years", Progress in Safety Science and Technology, Beijing, China, Aug. 10-13, 2000 (2000), (Pt. 2), 705-719.

Die Mikroverkapselung von rotem Phosphor kann mit an sich bekannten Mittel erfolgen. Beispiele hierfür sind u. a. polymere Verbindungen wie Cyclohexanon-Harze, Melamin-Harze, Phenol-lsobutyraldehyd-Harze, Harnstoff-Melamin-Phenol-Formaldehyd-Harze, Phenol-Formaldehyd-Harze, Harnstoff-Resorcin-Formaldehyd-Harze, Harnstoff-Resorcin-Formaldehyd, Hexamethylentetramin-Harze, letztere insbesondere hergestellt aus einem Gemisch von 0,4 bis 4 % Harnstoff, 2 bis 20 % Resorcin, 5 bis 97,5 % Formaldehyd sowie 0,1 bis 8 % Hexamethylentetramin jeweils bezogen auf die Masse an eingesetztem roten Phosphor oder Epoxidharze.

Des Weiteren lässt sich der rote Phosphor an sich auch durch Aufbringung anorganischer Substanzen vorstabilisieren. Hierzu gehören beispielsweise Metallsalze bzw. Metallverbindungen u. a. von Aluminium, Eisen, Calcium, Cadmium, Kobalt, Nickel, Magnesium, Mangan, Silber, Zinn, Zink oder Titan. Geeignet sind hier insbesondere die Oxide, Carbonate/Oxicarbonate, Hydroxide sowie Salze organischer Säuren. Ferner könne auch Verbindungen wie Siliciumdioxid verwendet werden.

Beispiele für wie oben beschrieben vorbehandelten roten Phosphor finden sich u.a. in den Schriften DE-A-196 19 701, DE-A-26 25 673, EP-A-0 195 131, EP-A-0 052 217 und WO 87/00187.

Der rote Phosphor kann im Rahmen der vorliegenden Erfindung sowohl in Pulverform als auch in Form von Konzentraten in die Formmassen eingebracht werden. Bei diesen Konzentraten handelt es sich im Allgemeinen um polymere Trägermaterialien mit einem Phosphoranteil zwischen 40 und 70 Gew.-% bezogen auf die Gesamtmasse des Konzentrates. Typische polymere Trägermaterialien sind in diesem Zusammenhang wie oben beschriebene Polyamide, bevorzugt Polyamid 6 und Polyamid 6.6, besonders bevorzugt Polyamid 6, wie oben beschriebene Polyester, Epoxidharze, Phenol-Harze, Esterwachse, LDPE oder EVA. Besonders bevorzugt sind auch Phenolharze.

Anorganische Phosphate (Komponente D) sind Umsetzungsprodukte von alkalischen Verbindungen wie Calciumoxid, Aluminiumoxid, Zinkoxid oder Manganoxid mit Phosphorsäure oder kondensierten Phosphorsäuren.

Die Mengenverhältnisse der Komponenten A, B, C, D und E in dem glühdrahtbeständigen Polyamid hängen wesentlich vom vorgesehenen Anwendungsgebiet ab und können in weiten Grenzen variieren. Je nach Anwendungsgebiet enthält das erfindungsgemäße Polymer als Komponente A 40 bis 90 Gew.-% Polyamid, als Komponente B 0 bis 40 Gew.-% Verstärkungsstoffe wie Glasfasern, Glaskugeln oder mineralische Verstärkungsstoffe, als Komponente C 3 bis 15 Gew.-% roten Phosphor, als Komponente D ein anorganisches Phosphat in 5 bis 20 Gew.-% und als Komponente E optionell weitere Additive in 0 bis 10 Gew.-%.

In einer bevorzugten Ausführungsform enthält das Polymer als Komponente A 45 bis 65 Gew. % Polyamid, als Komponente B 20 bis 35 Gew.-% Verstärkungsstoffe wie Glasfasern, Glaskugeln oder mineralische Verstärkungsstoffe, als Komponente C 5 bis 10 Gew.-% roten Phosphor, als Komponente D ein anorganisches Phosphat in 5 bis 15 Gew.-% und als Komponente E weitere Additive in 0 bis 5 Gew.-%, wobei die Summe der Komponenten immer 100 Gew.-% beträgt.

In einer besonders bevorzugten Ausführungsform enthält das Polymer als Komponente A 45 bis 65 Gew. % Polyamid, als Komponente B 20 bis 35 Gew.-% Verstärkungsstoffe wie Glasfasern, Glaskugeln oder mineralische Verstärkungsstoffe, als Komponente C 5 bis 10 Gew.-% roten Phosphor, als Komponente D ein anorganisches Phosphat in 5 bis 15 Gew.-%, und als Komponente E weitere Additive in 0,1 bis 5 Gew.-%, wobei die Summe der Komponenten immer 100 Gew.-% beträgt.

Die Erfindung betrifft auch eine flammfest ausgerüstete Kunststoff-Formmasse, enthaltend die erfindungsgemäße Flammschutzmittel-Kombination.

Bevorzugt handelt es sich bei dem Kunststoff um thermoplastische Polymere bzw. um Blends aus zwei oder mehreren verschiedenen Polymeren. Hierzu gehören thermoplastische Polymere wie Homo- und Copolymere von olefinisch ungesättigten Monomeren wie Polyfluorethylen, Polyethylen, Polypropylen, Ethylen/Propylen-Copolymere, Polystyrole, Styrol/Acrylnitril-Copolymere, ABS-Copolymere (Acrylnitril/Butadien/Styrol), Vinylchlorid Homo- und Copolymere, Polyacrylate, insbesondere Polymethylmethacrylat, Vinylacetat-Copolymere, Polyacetale, Polycarbonate, Polyester und Polyamide. Polyamide und Polyester sind bevorzugt, Polyamide sind im vorliegenden Zusammenhang besonders bevorzugt.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m-und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6,6 und Polyamid-6 und ihre Mischungen, wobei Polyamid 6,6 ganz besonders bevorzugt ist. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)- methan, Bis-(4-aminocyclohexyl)-propan, 3,3'-Dimethyl-4,4'-diamino-dicyclohexylmethan, 3-Aminomethyl, 3,5,5,-trimethylcyclohexylamin, 2,5-und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4-und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie -Aminocapronsäure, -Aminoundecansäure oder -Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diaminodicyclohexylmethan und Caprolactam; oder aus Isophthalsäure, 3,3'- Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30% durch Terephthalsäure ersetzt sein.

Die beschriebenen Polyamide können zudem mittels geeigneter Reagenzien verzweigt bzw. ihre Polymerketten entsprechend verlängert sein. Als Verzweiger bzw. Kettenverlängerer kommen niedermolekulare und oligomere Verbindungen in Frage, die über mindestens zwei reaktive Gruppen verfügen, die mit primären und/oder sekundären Aminogruppen, und/oder Amidgruppen und/oder Carbonsäuregruppen reagieren können. Reaktive Gruppen können z. B. Isocyanate, ggf. blockiert, Epoxide, Maleinsäureanhydrid, Oxazoline, Oxazine, Oxazolone, u. ä. sein. Bevorzugt sind Diepoxide auf Basis Diglycidylether (Bisphenol und Epichlorhydrin), auf Basis Aminepoxidharz (Anilin und Epichlorhydrin), auf Basis Diglycidylester (cycloaliphatische Dicarbonsäuren und Epichlorhydrin) einzeln oder in Mischungen sowie 2,2-Bis[p-hydroxy-phenyl]1-propan-diglycidylether, Bis-[p-(N-methyl-N-2,3-epoxypropylamino)-phenyl]-methan. Besonders bevorzugt sind Glycidylether, ganz besonders bevorzugt BisphenoIA-Diglycidylether.

Die Polymer-Formkörper, -Filme, -Fäden und -Fasern sind dadurch gekennzeichnet, dass es sich um Polystyroi-Hl (High-Impact), Polyphenylenether, Polyamide, Polyester, Polycarbonate und Blends oder Polymerblends vom Typ ABS (AcrylnitrilButadien-Styrol) oder PC/ABS (Polycarbonat/Acrylnitril-Butadien-Styrol), Polyamid, Polyester und/oder ABS handelt, bevorzugt um Polyamid.

Die vorgenannten Additive (Komponente C-E) können in den verschiedensten Verfahrensschritten in den Kunststoff eingebracht werden. So ist es bei Polyamiden, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt liegt der rote Phosphor als Schmelzmischung oder in Form eines Masterbatches vor. Besonders bevorzugt sind Konzentrate in Phenolharzen.

Bevorzugt handelt es sich bei den Polyamiden um solche vom Aminosäure-Typ und/oder vom Diamin-Dicarbonsäure-Typ.

Bevorzugt handelt es sich bei den Polyamiden um Polyamid 6, Polyamid 12, teilaromatische Polyamide und/oder Polyamid 66.

Bevorzugt sind die Polyamide unverändert, gefärbt, gefüllt, ungefüllt, verstärkt, unverstärkt oder auch anders modifiziert.

Als faser- oder teilchenförmige Füllstoffe und Verstärkungsstoffe (Komponente B) für die erfindungsgemäßen Formmassen können Glasfasern, Glaskugeln, Glasgewebe, Glasmatten, Kohlenstofffasern, Aramidfasern, Kaliumtitanatfasern, Naturfasern, amorphe Kieselsäure, Magnesiumcarbonat, Bariumsulfat, Feldspat, Glimmer, Silikate, Quarz, Kaolin, Talkum, Titandioxid, Wollastonit, u. a. zugesetzt werden, die auch oberflächenbehandelt sein können. Bevorzugte Verstärkungsstoffe sind handelsübliche Glasfasern. Die Glasfasern, die im allgemeinen einen Faserdurchmesser zwischen 8 und 18 µm haben, können als Endlosfasern oder als geschnittene oder gemahlene Glasfasern zugesetzt werden, wobei die Fasern ggf. mit Oberflächenmodifizierungen wie z. B. Silanen oder Glasfaserschlichten versehen sein können. Geeignet sind auch nadelförmige mineralische Füllstoffe. Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt.

Vorzugsweise weist das Mineral ein UD-(Länge Durchmesser)-Verhältnis von 8 : 1 bis 35 : 1, bevorzugt von 8 : 1 bis 11 : 1 auf. Der mineralische Füllstoff kann gegebenenfalls oberflächenbehandelt sein.

Die erfindungsgemäßen Polymere und Formmassen können weitere Additive (Komponente E) u. a. Mittel gegen Wärmezersetzung, Mittel gegen Wärmevernetzung, Mittel gegen Beschädigung durch ultraviolettes Licht, Weichmacher, Fliess- und Verarbeitungshilfsmittel, weitere Flammschutzmittel, Gleitund Entformungsmittel, Nukleierungsmittel, Antistatika, Stabilisatoren sowie Farbstoffe und Pigmente enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen genannt.

Als UV-Stabilisatoren seien verschiedene substituierte Resorcine, Salicylate, Benzotriazole und Benzophenone genannt.

Es können anorganische Pigmente, wie Titandioxid, Ultramarinblau, Eisenoxid und Russ, weiterhin organische Pigmente, wie Phthalocyanine, Chinacridone, Perylene sowie Farbstoffe, wie Nigrosin und Anthrachinone als Farbmittel sowie andere Farbmittel zugesetzt werden. Im Rahmen der vorliegenden Erfindung ist die Verwendung von Russ bevorzugt.

Als Keimbildungsmittel können z.B. Natriumphenylphosphinat, Aluminiumoxid oder Siliziumdioxid eingesetzt werden.

Allgemein eingesetzte Gleit- und Entformungsmittel sind Esterwachse, Pentaerithryttetrastearat (PETS), langkettige Fettsäuren (z. B. Stearinsäure oder Behensäure), deren Salze (z. B. Ca- oder Zn-Stearat) sowie Amidderivate (z.B. Ethylen-bisstearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)-benzolsulfonamid genannt.

Als weitere Flammschutzmittel kommen z. B. phosphorhaltige Flammschutzmittel ausgewählt aus den Gruppen der mono- und oligomeren Phosphor- und Phosphonsäureester, Phosphonate, Phosphinate, Phosphite, Hypophosphite, Phosphinoxide und Phosphazene, wobei auch Mischungen von mehreren Komponenten ausgewählt aus einer oder verschiedenen dieser Gruppen als Flammschutzmittel zum Einsatz kommen können, in Frage. Auch andere hier nicht speziell erwähnte vorzugsweise halogenfreie Phosphorverbindungen können alleine oder in beliebiger Kombination mit anderen vorzugsweise halogenfreien Phosphorverbindungen eingesetzt werden.

### Beispiele

### 1. Eingesetzte Komponenten

Handelsübliche Polymere (Granulate):
Komponente A:

| | |
|---|---|
| Polyamid 6.6 (PA 6.6): | ^{®}Durethan A 30 (Fa. Bayer AG, D) |

Komponente B:

| | |
|---|---|
| Vetrotex EC 10 P983 | Glasfasern, (Fa. Vetrotex, D) |

Flammschutzmittelkomponenten:
Komponente C:
^{®}Exolit RP 695, Clariant GmbH, Sulzbach, D
   Masterbatch aus 50% stabilisiertem und mikroverkapseltem roten Phosphor in Polyamid 6
Komponente D:
Calciumpyrophosphat neutral C 54-80
Zinkpyrophosphat Z34-80.
Aluminiummetaphosphat M16-04
Borphosphat B13-04
Magnesiummetaphosphat M16-54
Alle Chemische Fabrik Budenheim, Budenheim, D

### 2. Herstellung, Verarbeitung und Prüfung von flammhemmenden Kunststoff-Formmassen

Die Flammschutzmittelkomponenten wurden in dem in den Tabellen angegebenen Verhältnis mit dem Polymergranulat und ggf. dem Stabilisatoren vermischt und auf einem Doppelschnecken-Extruder (Typ Leistritz ZSK 27/44) bei Temperaturen von 260 bis 310°C (PA 6.6-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 270 bis 320°C (PA 6.6-GV) zu Prüfkörpern verarbeitet und anhand des UL 94-Tests (Underwriter Laboratories) auf Flammwidrigkeit geprüft und klassifiziert. Bewertet werden hierbei u. a. Nachbrennzeiten und Abtropfverhalten von ASTM-Normprüfkörpern.

Für die Einstufung eines flammgeschützten Kunststoffs in die Brandklasse UL94V-0 müssen im einzelnen die folgenden Kriterien erfüllt sein: bei einem Satz von 5 ASTM Normprüfkörpern (Masse: 127 x 12,7 x X, mit X = 3,2; 1,6 und 0,8 mm) dürfen alle Proben nach zweimaliger Beflammung von 10 Sekunden Dauer mit einer offenen Flamme definierter Höhe nicht länger als 10 Sekunden Nachbrennen. Die Summe der Nachbrennzeiten bei 10 Beflammungen von 5 Proben darf nicht größer als 50 Sekunden sein. Zudem darf kein brennendes Abtropfen, vollständiges Abbrennen oder Nachglühen des jeweiligen Prüfkörpers von länger als 30 Sekunden erfolgen. Die Einstufung UL94V-1 verlangt, dass die Einzelnachbrennzeiten nicht länger als 30 Sekunden betragen und dass die Summe der Nachbrennzeiten von 10 Beflammungen von 5 Proben nicht größer als 250 Sekunden ist. Die , Gesamtnachglühzeit darf nicht mehr als 250 Sekunden betragen. Die übrigen Kriterien sind identisch mit den oben erwähnten. Eine Einstufung in die Brandklasse UL94V-2 erfolgt dann, wenn es bei Erfüllen der übrigen Kriterien der UL94V-1 Einstufung zu einem brennenden Abtropfen kommt.

Für elektronische Bauteile in Haushaltsgeräten wird zudem die Prüfung der Flammwidrigkeit von Kunststoffen in der Glühdrahtprüfung GWFI nach IEC 60695-2-12 und GWIT nach IEC 60695-2-13 gefordert. Hierbei wird in der Regel an 3 Prüfkörpern (beispielsweise an Platten der Geometrie 60 x 60 x 1 mm) mit Hilfe eines glühenden Drahtes bei Temperaturen zwischen 550 und 960°C als GWFI die maximale Temperatur ermittelt, bei der eine Nachbrennzeit von 30 Sekunden nicht überschritten wird und die Probe nicht brennend abtropft. Als GWIT wird die Temperatur ermittelt, die um 25°C höher ist als die maximale Glühdrahttemperatur, die zu keiner Entzündung der Probe führt (eine Entzündung bedeutet hier, dass eine Flamme länger als 5 Sekunden sichtbar ist). Auch diese Prüfung ist besonders im Bereich Elektro/Elektronik von Interesse, da Bauelemente in elektronischen Erzeugnissen im Fehlerfall oder bei Überlastung derart hohe Temperaturen annehmen können, dass sich Teile in unmittelbarer Nähe entzünden können. In der Glühdrahtprüfung wird eine solche thermische Beanspruchung nachempfunden.
Für den uneingeschränkten Einsatz in Hausgeräten muss ein Probekörper einen GWFI von 850°C und einen GWIT von 775°C aufweisen.

Die Fließfähigkeit der Formmassen wurde durch Ermittlung des Schmelzvolumenindex (MVR) bei 275°C/2,16 kg bestimmt. Ein starker Anstieg des MVR-Wertes deutet auf einen Polymerabbau hin.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Tabelle 1 zeigt Vergleichsbeispiele, in denen als Flammschutzmittel roter Phosphor, Calciumpyrophosphat (CaPP), Zinkpyrophosphat (ZnPP) und Aluminiummetaphosphat (AIMP) verwendet werden.

**Tabelle 1:**

| Vergleichsbeispiele: Flammschutz-Formmassen mit den Komponenten als einzelne Additive in glasfaserverstärktem PA 6.6 | | | | | | | |
|---|---|---|---|---|---|---|---|
| Durethan A 30 mit 30 % Glasfasern Vetrotex EC 10 P 983. | | | | | | | |
| Vergleich | Exolit RP 695 [%] | CaPP [%] | ZnPP [%] | AIMP [%] | Klasse UL 94 (0,8 mm) | GWIT/IEC 60695-2-13 [°C] | MVR [cm³/10'] |
| V1 | 10 | 0 | 0 | 0 | n.k.^{*)} | 700 | 19 |
| V2 | 15 | 0 | 0 | 0 | V-0 | 725 | 21 |
| V3 | 0 | 10 | 0 | 0 | n.k. | 650 | 25 |
| V4 | 0 | 20 | 0 | 0 | n.k. | 700 | 23 |
| V5 | 0 | 0 | 10 | 0 | n.k. | 625 | 21 |
| V6 | 0 | 0 | 20 | 0 | n.k. | 550 | 21 |
| V7 | 0 | 0 | 0 | 10 | n.k. | 600 | 21 |
| V8 | 0 | 0 | 0 | 20 | n.k. | 650 | 21 |

| | | | | | | | |
|---|---|---|---|---|---|---|---|
| *) nicht klassifizierbar, d.h. zu lange Nachbrennzeit | | | | | | | |

Durch die Verwendung von rotem Phosphor wird UL 94 V-0 erreicht, nicht aber GWIT > 775°C. Ebenso wird den untersuchten anorganischen Phosphaten keine Klassifizierung erreicht und nur ein GWIT maximal 700°C. Eine Flammschutzwirkung der anorganischen Phosphate ist nicht zu erkennen.

Die Ergebnisse der Beispiele, in denen die Flammschutzmittel-Mischung gemäß der Erfindung eingesetzt wurde, sind in Tabelle 2 aufgelistet. Alle Mengen sind als Gew.-% angegeben und beziehen sich auf die Kunststoff-Formmasse einschließlich der Flammschutzmittel-Kombination und Zusatzstoffen.

**Tabelle 2: Erfindungsgemäße Kombination (B1-B7) von rotem Phosphor und anorganischem Phosphat in Polyamid 66 GF**

| Beispiel Erfindung | Exolit RP 695 [%] | CaPP [%] | ZnPP [%] | AIMP [%] | Klasse UL 94 (0,8 mm) | GWIT / IEC 60695-2-13 [°C] | MVR [cm³/10'] |
|---|---|---|---|---|---|---|---|
| B1 | 10 | 5 | 0 | 0 | V-0 | 775 | 17 |
| B2 | 12 | 5 | 0 | 0 | V-0 | 775 | 14 |
| B3 | 12 | 10 | 0 | 0 | V-0 | 800 | 15 |
| B4 | 12 | 0 | 5 | 0 | V-0 | 775 | 13 |
| B5 | 12 | 0 | 10 | 0 | V-0 | 775 | 12 |
| B6 | 12 | 0 | 0 | 5 | V-0. | 750 | 11 |
| B7 | 12 | 0 | 0 | 10 | V-0 | 800 | 15 |

Mit rotem Phosphor allein (Vergleichsbeispiel V1, V2) wird zwar V-0 erreicht, aber nur ein GWIT von 725-750°C. Durch die erfindungsgemäße Kombination von rotem Phosphor und anorganischen Phosphaten (B1-B7) wird sowohl V-0 als auch GWIT 775°C bzw. 800°C erreicht. Der MVR von B1 bis B7 liegt unter 20 cm³/10 min, die Rezepturen zeigen demnach keinen Polymerabbau. Die erfindungsgemäßen Rezepturen sind gut zu verarbeiten, haben sehr gute thermische Stabilität und weisen gute mechanische und elektrische Werte (z.B. CTI 600V) auf.

## Patentansprüche

1. Glühdrahtbeständige flammwidrige Polymere, **dadurch gekennzeichnet, dass** sie als Komponente A 40 bis 90 Gew.-% Polymer,
als Komponente B 0 bis 40 Gew.-% Verstärkungsstoff,
als Komponente C 3 bis 15 Gew.-% roten Phosphor,
als Komponente D 5 bis 20 Gew.-% anorganisches Phosphat,
als Komponente E 0 bis 10 Gew.-% weitere Additive
enthalten, wobei die Summe der Komponenten immer 100 Gew.-% beträgt.

2. Glühdrahtbeständige flammwidrige Polymere nach Anspruch 1, **dadurch gekennzeichnet, dass** sie die Komponente A in Mengen von 45 bis 65 Gew.-% enthalten.

3. Glühdrahtbeständige flammwidrige Polymere nach Anspruch 1 oder 2, **dadurch gekennzeichnet, dass** sie die Komponente A in Mengen von 50 bis 65 Gew.-% enthalten.

4. Glühdrahtbeständige flammwidrige Polymere nach einem oder mehreren der Ansprüche 1 bis 3, **dadurch gekennzeichnet, dass** sie die Komponente B in Mengen von 25 bis 35 Gew.-% enthalten.

5. Glühdrahtbeständige flammwidrige Polymere nach einem oder mehreren der Ansprüche 1 bis 4, **dadurch gekennzeichnet, dass** sie die Komponente C in Mengen von 5 bis 10 Gew.-% enthalten.

6. Glühdrahtbeständige flammwidrige Polymere nach einem oder mehreren der Ansprüche 1 bis 5, **dadurch gekennzeichnet, dass** sie die Komponente C in Mengen von 7 bis 10 Gew.-% enthalten.

7. Glühdrahtbeständige flammwidrige Polymere nach einem oder mehreren der Ansprüche 1 bis 6, **dadurch gekennzeichnet, dass** sie die Komponente D in Mengen von 5 bis 15 Gew.-% enthalten.

8. Glühdrahtbeständige flammwidrige Polymere nach einem oder mehreren der Ansprüche 1 bis 7, **dadurch gekennzeichnet, dass** sie die Komponente D in Mengen von 5 bis 12 Gew.-% enthalten.

9. Glühdrahtbeständige flammwidrige Polymere nach einem oder mehreren der Ansprüche 1 bis 8, **dadurch gekennzeichnet, dass** sie die Komponente E in Mengen von 0,05 bis 10 Gew.-% enthalten.

10. Glühdrahtbeständige flammwidrige Polymere nach einem oder mehreren der Ansprüche 1 bis 9, **dadurch gekennzeichnet, dass** sie als weitere Komponente E Additive in Mengen von 0,1 bis 5 Gew.-% enthalten.

11. Glühdrahtbeständige flammwidrige Polymere nach einem oder mehreren der Ansprüche 1 bis 10, **dadurch gekennzeichnet, dass** es sich bei den Polymeren um Polyamide handelt.

12. Glühdrahtbeständige flammwidrige Polymere nach einem oder mehreren der Ansprüche 1 bis 11, **dadurch gekennzeichnet, dass** es sich bei den Polymeren um verstärkte Polyamide handelt.

13. Glühdrahtbeständige flammwidrige Polymere nach einem oder mehreren der Ansprüche 1 bis 12, **dadurch gekennzeichnet, dass** sie als Verstärkungsstoffe Glasfasern und/oder mineralische Füllstoffe enthalten.

14. Glühdrahtbeständige flammwidrige Polymere nach einem oder mehreren der Ansprüche 1 bis 13, **dadurch gekennzeichnet, dass** sie als roten Phosphor stabilisierten roten Phosphor enthalten.

15. Glühdrahtbeständige flammwidrige Polymere nach einem oder mehreren der Ansprüche 1 bis 14, **dadurch gekennzeichnet, dass** der rote Phosphor mit Magnesium, Zinn, Aluminium, Silber oder Kombinationen daraus stabilisiert ist.

16. Glühdrahtbeständige flammwidrige Polymere nach einem oder mehreren der Ansprüche 1 bis 15, **dadurch gekennzeichnet, dass** rote Phosphor eine Teilchengröße < 200 µm aufweist.

17. Glühdrahtbeständige flammwidrige Polymere nach einem oder mehreren der Ansprüche 1 bis 16, **dadurch gekennzeichnet, dass** es sich bei den anorganischen Phosphaten um Monocalciumphosphat, Dicalciumphosphat, Tricalciumphosphat, Calciumpyrophosphat, Magnesiumphosphat, Dimagnesiumphosphat, Trimagnesiumphosphat, Magnesiummetaphosphat, Manganphosphat, Dimanganphosphat, Trimanganphosphat, Zinkphosphat, Trizinkphosphat, Zinkpyrophosphat, Aluminiumphosphat, Trialuminiumphosphat, Aluminiummetaphosphat oder Borphosphat handelt.

18. Glühdrahtbeständige flammwidrige Polymere nach Anspruch 17, **dadurch gekennzeichnet, dass** es sich bei den anorganischen Phosphaten um Calciumpyrophosphat, Magnesiummetaphosphat, Zinkpyrophosphat, Aluminiummetaphosphat oder Borphosphat handelt.

19. Glühdrahtbeständige flammwidrige Polymere nach Anspruch 17 oder 18, **dadurch gekennzeichnet, dass** es sich bei den anorganischen Phosphaten um Calciumpyrophosphat handelt.

20. Glühdrahtbeständige flammwidrige Polymere nach einem oder mehreren der Ansprüche 1 bis 19, **dadurch gekennzeichnet, dass** es sich bei den Verstärkungsstoffen um Glasfasern, Glaskugeln oder mineralische Verstärkungsstoffe handelt.

21. Glühdrahtbeständige flammwidrige Polymere nach einem oder mehreren der Ansprüche 1 bis 20, **dadurch gekennzeichnet, dass** es sich bei dem Additiv um Stabilisatoren, Verarbeitungshilfsmittel, Antidripping-Mitteln, Farbstoffen, Pigmenten und/oder Wachse handelt.

22. Glühdrahtbeständige flammwidrige Polymere nach einem oder mehreren der Ansprüche 1 bis 21, **dadurch gekennzeichnet, dass** sie
als Komponente A 50 bis 65 Gew.-% Polymer,
als Komponente B 25 bis 35 Gew.-% Verstärkungsstoff,
als Komponente C 7 bis 10 Gew.-% roten Phosphor,
als Komponente D 5 bis 12 Gew.-% anorganisches Phosphat,
als Komponente E 0,05 bis 5 Gew.-% weitere Additive
enthalten, wobei die Summe der Komponenten immer 100 Gew.-% beträgt.
